# EUROPEAN PATENT APPLICATION

(11) **EP 4 728 849 A1**
(43) Date of publication of application: **22.04.2026**
(21) Application number: 24207332.8
(22) Date of filing: 17.10.2024
(51) Int. Cl.: A01D 43/08, A01D 41/127

(54) **STRAW CHOPPER MONITORING SYSTEM**

(71) Applicant: CNH Industrial Belgium N.V., 8210 Zedelgem (BE)
(72) Inventor: Vanlerberghe, Jasper, 8210 Zedelgem (BE); Van Campenhout, Simon, 8210 Zedelgem (BE); Verschaeve, Bertl, 8210 Zedelgem (BE); Leenknegt, Arno, 8210 Zedelgem (BE)
(74) Representative: CNH Industrial IP Department

(57) **Abstract**

A straw chopper (72) for a harvester (10) comprises a high resolution camera (210) and a high frame rate camera (220). The high resolution camera (210) is configured to obtain high resolution images of at least a portion of the chopped straw. The high frame rate camera (220), configured to obtain high frame rate images of at least a portion of the chopped straw. An image resolution of the high frame rate camera (220) is lower than an image resolution of the high resolution camera (210), and a frame rate of the high frame rate camera (220) is higher than a frame rate of the high resolution camera (210).

## Description

### TECHNICAL FIELD

The present invention relates to a straw chopper for a harvester, the straw chopper comprising a chopper housing with an inlet for receiving unchopped straw and an outlet for releasing chopped straw, a camera configured to obtain images of at least a portion of the chopped straw, and a controller coupled to the camera and configured to receive the images therefrom. The present invention further relates to a method of monitoring an operation of a straw chopper of a harvester.

### BACKGROUND

Many agricultural harvesters are designed to harvest crops and leave some or all of the harvested crop behind on the field. In a combine harvester, for example, the harvested crop is threshed to separate the grain therefrom, and the remaining straw is transported to the rear of the combine harvester for release on the field. The release of straw residue behind the combine harvester may be done by dropping the straw in a swath on the field, for example to allow it being picked up by a baler machine later. Often, however, the straw residue is chopped into smaller pieces by a straw chopper and spread over the field by a spreader system.

A typical design for such a straw chopper uses a rotating shaft or drum with a plurality of knives extending radially therefrom. The shaft or drum is at least partly located inside a chopper housing and oriented at least approximately in parallel with the field and perpendicular to the driving direction of the harvester. The unchopped straw is received at an inlet of the chopper housing that is typically located at the top and/or front end of the chopper housing. Chopped straw is released from an outlet of the chopper housing that is typically located more to the bottom and/or rear end of the chopper housing. In use the knives rotate around the rotational axis of the shaft or drum at high speed. Counter knives are usually positioned adjacent the chopper housing outlet, such that the straw is chopped between a rotating knife and a stationary counter knife. When a plurality of knives are provided along the width of the straw chopper, the straw is chopped into many smaller pieces before it leaves the chopper housing.

In order to monitor the straw chopping process, cameras may be used to obtain images of the chopped straw. The obtained images are analyzed to determine, for example, a size of the chopped pieces of straw or a sharpness of the cuts. An example of a straw chopper equipped with such a camera can be found in the European patent application published as EP 3 138 383 A1. With the chopper typically rotating at a speed of over 3000 RPM, large volumes of chopped straw are accelerated to high speeds. A high quality camera with a high image resolution is needed to ensure that the camera images can be used for accurate analysis of the chopping quality. Consequently, large amounts of image data are continuously created, communicated, stored, and processed.

It is an aim of the present invention to address one or more disadvantages associated with the prior art.

### SUMMARY OF THE INVENTION

According to an aspect of the invention there is provided a straw chopper for a harvester, the straw chopper comprising a chopper housing, a high resolution camera, a high frame rate camera, and a controller. The chopper housing comprises an inlet for receiving unchopped straw and an outlet for releasing chopped straw. The high resolution camera is configured to obtain high resolution images of at least a portion of the chopped straw. The high frame rate camera is configured to obtain high frame rate images of at least a portion of the chopped straw. An image resolution of the high frame rate camera is lower than an image resolution of the high resolution camera. A frame rate of the high frame rate camera is higher than a frame rate of the high resolution camera. The controller is coupled to the high resolution camera and to the high frame rate camera for respectively receiving the high resolution images and the high frame rate images therefrom.

The addition of a lower resolution, higher frame rate camera makes it possible to obtain reliable information about the dynamics of the chopped straw, in addition to the more static information, such as the length of the cut straw pieces and the sharpness of the cuts. While the higher frame rate makes it possible to identify the same straw pieces in two or more successive images, the lower resolution reduces the processing time of the captured images.

Exemplary dynamic properties of the chopped straw that are derivable from the high frame rate images include a velocity and/or direction of the chopped straw. In a preferred embodiment, a two dimensional vector field is determined indicating a speed of the chopped straw in a cross section through the straw chopper. For example, such a cross section may span a large portion (up to 100%) of the full width of the straw chopper, and be in parallel with a counter knife bar of the straw chopper. The cross section may be substantially perpendicular to a driving direction of the harvester, and is preferably positioned downstream of the counter knife bar.

Based on this information derived from the high frame rate images, the controller may, for example, detect whether crop is moving in front of the other, high resolution, camera, or whether and where there is a crop blockage in the straw chopper.

Optionally, the high frame rate images are processed to determine a speed difference between the chopped straw and a knife of the straw chopper. If such a speed difference is observed, this indicates slippage between the knife and the crop. The speed of the chopped straw is determined based on analysis of the high frame rate images. If at least a portion of the knife is visible in the high frame rate images, then the speed of the knife can be determined based on the high frame rate images too. Alternatively, the speed of the knife is determined based on a rotational speed of the rotational axle the knife is mounted to. This rotational speed of the rotational axle may be determined by a speed sensor mounted near the rotational axle, or near a moving part of the drive system for driving the rotational axle.

Excessive amounts of slippage may lead to an accumulation of crop in, and eventually blockage of, the straw chopper. To reduce the risk of blockage, various corrective measures may be considered, such as reducing the travel speed of the harvester or raising a height of a header of the harvester to reduce the amount of straw that needs to be processed. Alternatively, an operational speed of the straw chopper may be increased to increase the throughput of the straw chopper.

The high resolution images may be used by the controller to determine a quality of the chopped straw. For example, a length of the cut pieces of straw or a sharpness of the cuts may be derived from the high resolution images. Additionally, straw properties such as moisture content may be derivable from the color of the straw shown in the high resolution images.

In some embodiments, the controller may be configured to process the high resolution images in dependence of the high frame rate images. For example, the high resolution camera is only used to obtain high resolution images for processing by the controller, when the analysis of the high frame rate images indicates that there is crop (i.e., chopped straw) moving in front of the high resolution camera, or the capturing and/or processing of high resolution images is triggered by the crop moving at a predetermined minimum velocity.

While the high frame rate camera and the high resolution camera will typically be two separate and distinct cameras, they may together be embodied by a single camera system wherein the controller is configured to adjust the frame rate and the image resolution of the single camera system such as to alternately function as the high resolution camera and the high frame rate camera. Accordingly, the single camera system is configured to function in two or more different modes depending on circumstances and demands. For example, the single camera system may continuously operate in high frame rate mode until it is detected that crop is moving in front of the camera and the straw chopper is active. The camera may then switch to a high resolution mode in order to accurately and reliably monitor the quality of the chopped straw. Optionally, the single camera system continuously alternates between the two modes, such as to reliably and accurately determine both dynamic and static properties of the chopped straw. When no chopped straw is in view at all, or when a velocity of the chopped straw drops below a predetermined threshold, the single camera system may return to continuously operate in high frame rate mode again.

The frame rate of the high frame rate camera is preferably at least 120 frames per second, or more preferably at least 240, 500, or even 1000 frames per second. In a typical combine harvester straw chopper, the rotational axle with the knives may rotate at speeds up to 3600 RPM (Rotations Per Minute). With the straw chopper at such rotational speeds, the velocity of the chopped straw is such that only the high frame rate cameras can capture the straw pieces in successive images and derive a velocity and direction of the chopped straw therefrom. With even higher frame rates, the dynamic properties of the chopped straw are determined even more accurately. If the same straw pieces are visible in at least three successive images, the acceleration of the straw can be determined too. In combination with other information, such as a straw feed rate or the rotational speed of the straw chopper, this acceleration information may then be used to derive information about the interaction between the straw flow and the straw chopper therefrom. Information about this interaction may, e.g., relate to chop quality and sharpness of the chopper knives.

According to a further aspect of the invention, a method is provided for monitoring an operation of a straw chopper of a harvester. The method comprises steps of obtaining high frame rate images of straw that is chopped by the straw chopper, and processing the high frame rate images to determine, based thereon, a velocity of the chopped straw. The method further comprises a step of, depending on the velocity of the chopped straw, obtaining and processing high resolution images of at least a portion of the chopped straw. The processing of the high resolution images may comprise determining a quality of the chopped straw. An image resolution of the high resolution images is higher than an image resolution of the high frame rate images. A frame rate of the high resolution images is lower than a frame rate of the high frame rate images.

### BRIEF DESCRIPTION OF THE DRAWINGS

Embodiments of the invention will now be described by way of example with reference to the accompanying drawings, in which:
Figure 1 schematically shows a combine harvester wherein the invention may be advantageously used.
Figure 2 schematically shows a straw chopper according to an embodiment of the invention and suitable for use in the combine harvester of Figure 1.

### DETAILED DESCRIPTION

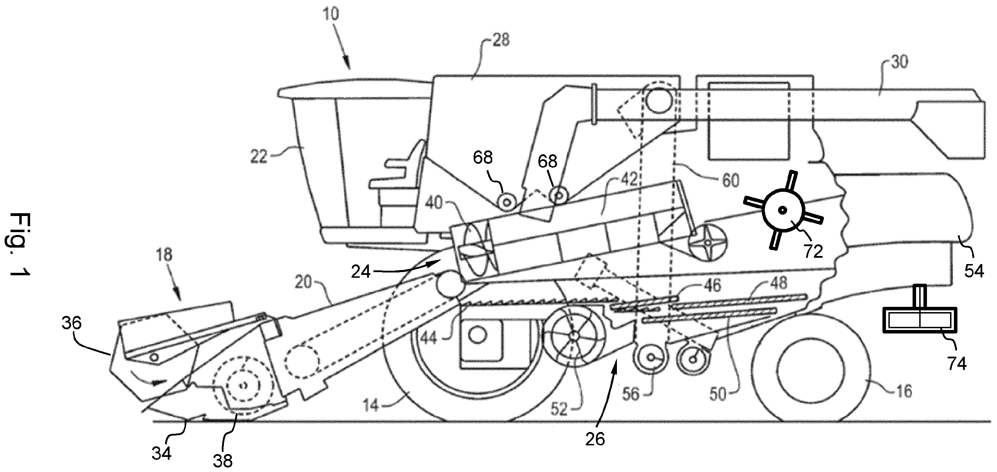

Figure 1 schematically shows an agricultural harvester in the form of a combine harvester 10. A combine harvester 10 as shown in Figure 1 generally includes front and rear ground engaging wheels 14, 16, a header 18, a feeder 20, an operator cabin 22, a threshing and separation system 24, a cleaning system 26, a grain tank 28 and an unloading tube 30.

The header 18 is mounted to the front of the combine harvester 10 and includes a cutter bar 34 for severing crops from a field during forward motion of the harvester 10. A single or multi-segment rotatable reel 36 feeds the crop into the header 18, and an intake auger 38 feeds the severed crop laterally from each side towards the feeder 20. The feeder 20 conveys the severed crop to the threshing and separation system 24.

The threshing and separation system 24 is of the axial-flow type and comprises a threshing rotor 40 at least partially located and rotatable within a threshing concave 42. The threshing concave may take the form of a perforated concave. Grain from the severed crop is threshed and separated from the material other than grain (MOG) by the action of the threshing rotor 40 within the threshing concave 42. Larger elements of MOG, such as stalks and leaves do not pass through the perforations in the threshing concave 42 and are discharged from the rear of the combine harvester 10.

The release of straw residue behind the combine harvester 10 may be done by dropping the straw in a swath on the field, for example to allow it being picked up by a baler machine later. Often, however, the straw residue is chopped into smaller pieces by a straw chopper 72 and spread over the field across the full width of the header 18 by a spreader system 74. The spreader system 74 typically comprises a left and a right rotary spreader, each spreading the chopped crop residue received from the straw chopper 72 laterally and away from the combine harvester 10. The chaff and other small MOG coming from the cleaning system 26 may be dropped on the field, spread over the field by a separate chaff spreader (not shown), or mixed in with the straw residue to be spread together therewith by the spreader system 74. The straw, chaff, and other MOG that is spread over the field serves as fertilizer for the soil.

Grain and smaller elements of MOG (small MOG henceforth), such as chaff, dust and straw are small enough to pass through the perforations in the threshing concave 42. Grain and small MOG that has successfully passed the threshing and separation system 24 falls onto a preparation pan 44 and is conveyed towards the cleaning system 26. The cleaning system comprises a series of sieves and a cleaning fan 52. The series of sieves includes a pre-cleaning sieve 46, an upper (or chaffer) sieve 48 and a lower (or shoe) sieve 50. The cleaning fan 52 generates an airflow through the sieves 46, 48, 50 that impinges on the grain and small MOG thereon. The small MOG is typically lighter than the grain and is therefore separated from the grain as it becomes airborne. The small MOG is subsequently discharged from the combine harvester 10 via a straw hood 54.

The preparation pan 44 and pre-cleaning sieve 46 oscillate in a fore-to-aft manner to transport the grain and small MOG to the upper surface of the upper sieve 48. The upper sieve 48 is arranged vertically above the lower sieve 50 and oscillates in a for-to-aft manner too, such that the grain and small MOG are spread across the two sieves 48, 50, while also permitting cleaned grain to pass through openings in the sieves 48, 50 under the action of gravity.

Cleaned grain falls to a clean grain auger 56 that is positioned below and in front of the lower sieve 50 and spans the width of the combine harvester 10. The clean grain auger 56 conveys the cleaned grain laterally to a vertical grain elevator 60, which is arranged to transport the cleaned grain to the grain tank 28. Once in the grain tank 28, grain tank augers 68 at the bottom of the grain tank convey the cleaned grain laterally within the grain tank 28 to an unloading tube 30 for discharge from the combine harvester 10.

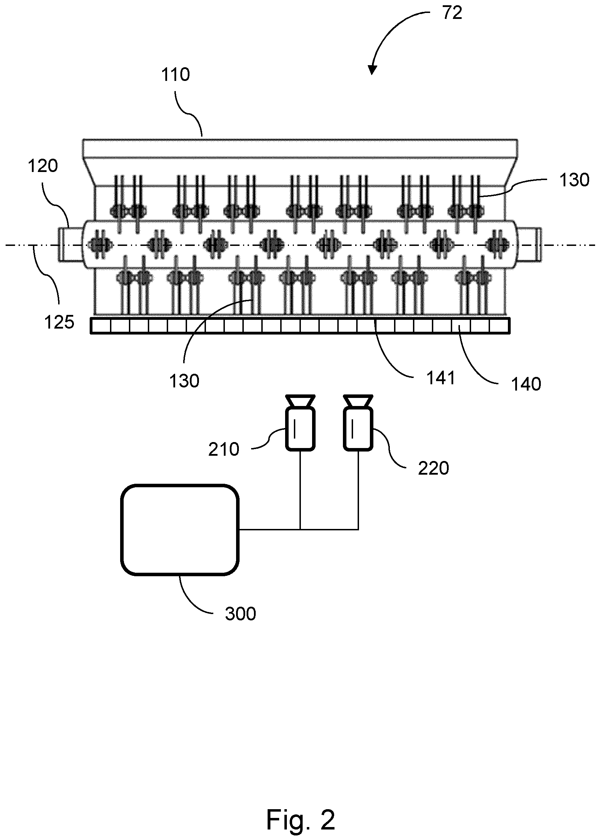

Figure 2 schematically shows a straw chopper 72 according to an embodiment of the invention and suitable for use in the combine harvester 10 of Figure 1. The straw chopper 72 comprises a chopper housing 110, a rotational axle 120 carrying a plurality of knives 130, and a counter knife 140. The chopper housing 110 comprises an inlet for receiving unchopped straw and an outlet for releasing chopped straw. The rotational axle 120 is mounted to the chopper housing 110 or some other part of the combine harvester 10 for rotation around a chopper axis 125. The knives 130 extend radially from the rotational axle 120 and are configured for rotating therewith. The knives 130 and the counter knife 140 are configured to cooperatively exert a chopping action on the received straw. The counter knife 140 is typically provided as a bar comprising a plurality of parallel counter knives 141 or counter knife blades 141, positioned such that, during use, the chopper knives 130 on the rotational axle 120 move through gaps between two adjacent counter knife blades 141. In some embodiments, two or more counter knife bars 140 may be provided for providing increased cutting action.

A high resolution camera 210 is provided for obtaining images of at least a portion of the chopped straw, downstream of the counter knife 140. A controller 300 is coupled to the camera 210 for receiving the high resolution images of at least a portion of the chopped straw therefrom. Based on the high resolution images, the controller 300 may, for example, determine a chopping length or a chopping quality of the straw chopper 72 during use. Known image recognition techniques, such as edge detection, image segmentation, color filtering, pattern classification, or object detection algorithms may be employed for deriving static properties of the chopped straw from the high resolution images. The image recognition techniques may involve machine learning algorithms. Such machine learning algorithms may employ neural networks that are trained on large collections of images previously obtained by similar high resolution cameras monitoring the outlet of similar straw choppers while harvesting similar crops. Some or all of the training images may be manually labelled and/or classified by experts who are able to recognize and assess the static properties of the chopped crop the image recognition algorithms are trained to detect.

In addition to the high resolution camera 210, a high frame rate camera 220 is provided. In this schematic drawing, both cameras 210, 220 are directly coupled to the same controller 300. In some embodiments, each camera 210, 220 may be coupled to a separate controller, while both separate controllers are coupled to a central controller 300.

Of the two cameras 210, 220, the high resolution camera 210 has the higher image resolution and the high frame rate camera 220 has the higher frame rate. While the use of high quality, high resolution cameras 210 for analyzing various aspects of the chopped straw before its release onto the field has been presented before, the addition of a second lower resolution, higher frame rate camera 220 brings some new advantages and possibilities. With this high frame rate camera 220, it is now possible to obtain reliable information about the dynamics of the chopped straw too. The velocity and direction of pieces of straw captured in the high frame rate images may be determined by first identifying the same pieces of straw in subsequent images and then measuring the displacement of said pieces in the short time span between the capturing of those subsequent images. Identifying the same pieces of straw in subsequent images may be done using known image recognition techniques, such as edge detection, image segmentation, color filtering, pattern classification, or object detection algorithms. The image recognition techniques may involve machine learning algorithms. Such machine learning algorithms may employ neural networks that are trained on large collections of images previously obtained by similar high frame rate cameras monitoring the outlet of similar straw choppers while harvesting similar crops. Some or all of the training images may be manually labelled and/or classified by experts who are able to recognize the same straw pieces in subsequent images.

So, the high resolution images from the high resolution camera 210 may be used to gather the more static information, such as the length of the cut straw pieces, color and color profiles of the straw, and the sharpness of the cuts. The lower resolution, higher frame rate images of the high frame rate camera 220 can, at the same time, be used to determine the speed and direction of the chopped straw as it passes through the fields of view of both cameras 210, 220. While the higher frame rate of the high framer rate camera 220 enables the identification of the same straw piece in two or more successive images, the lower resolution of this camera 220 reduces the processing time of the captured images.

Exemplary dynamic properties of the chopped straw that are derivable from the high frame rate images include a velocity and/or direction of the chopped straw. In a preferred embodiment, a two dimensional vector field is determined indicating a speed of the chopped straw in a cross section through the straw chopper 72. For example, such a cross section may span a large portion (up to 100%) of the full width of the straw chopper 72, and be in parallel with a counter knife bar 140 of the straw chopper 72. The cross section may be substantially perpendicular to a driving direction of the harvester 10, and is preferably positioned downstream of the counter knife bar 140.

Based on this information derived from the high frame rate images, the controller 300 may, for example, detect whether crop is moving in front of the other, high resolution, camera 210, or whether and where there is a crop blockage in the straw chopper 72.

Optionally, the high frame rate images are processed to determine a speed difference between the chopped straw and a knife 130 of the straw chopper 72. If such a speed difference is observed, this indicates slippage between the knife 130 and the crop. The speed of the chopped straw is determined based on analysis of the high frame rate images. If at least a portion of the knife 130 is visible in the high frame rate images, then the speed of the knife 130 can be determined based on the high frame rate images too. Alternatively, the speed of the knife 130 is determined based on a rotational speed of the rotational axle 120 the knife 130 is mounted to. This rotational speed of the rotational axle 120 may be determined by a speed sensor mounted near the rotational axle 120, or near a moving part of the drive system for driving the rotational axle 120.

Excessive amounts of slippage may lead to an accumulation of crop in, and eventually blockage of, the straw chopper 72. To reduce the risk of blockage, various corrective measures may be considered, such as reducing the travel speed of the harvester 10 or raising a height of a header 18 of the harvester 10 to reduce the amount of straw that needs to be processed. Alternatively, an operational speed of the straw chopper 72 may be increased to increase the throughput of the straw chopper 72.

The high resolution images may be used by the controller 300 to determine a quality of the chopped straw. For example, a length of the cut pieces of straw or a sharpness of the cuts may be derived from the high resolution images. Additionally, straw properties such as moisture content may be derivable from the color of the straw shown in the high resolution images.

In some embodiments, the controller 300 may be configured to process the high resolution images in dependence of the high frame rate images. For example, the high resolution camera 210 is only used to obtain high resolution images for processing by the controller 300, when the analysis of the high frame rate images indicates that there is crop (i.e., chopped straw) moving in front of the high resolution camera 210, or the capturing and/or processing of high resolution images is triggered by the crop moving at a predetermined minimum velocity.

While the high frame rate camera 220 and the high resolution camera 210 will typically be two separate and distinct cameras 210, 220, they may together be embodied by a single camera system wherein the controller 300 is configured to adjust the frame rate and the image resolution of the single camera system such as to alternately function as the high resolution camera 210 and the high frame rate camera 220. Accordingly, the single camera system is configured to function in two or more different modes depending on circumstances and demands. For example, the single camera system may continuously operate in high frame rate mode until it is detected that crop is moving in front of the camera and the straw chopper 72 is active. The camera may then switch to a high resolution mode in order to accurately and reliably monitor the quality of the chopped straw. Optionally, the single camera system continuously alternates between the two modes, such as to reliably and accurately determine both dynamic and static properties of the chopped straw. When no chopped straw is in view at all, or when a velocity of the chopped straw drops below a predetermined threshold, the single camera system may return to continuously operate in high frame rate mode again.

The frame rate of the high frame rate camera 220 is preferably at least 120 frames per second, or more preferably at least 240, 500, or even 1000 frames per second. In a typical combine harvester straw chopper 72, the rotational axle 120 with the knives 130 may rotate at speeds up to 3600 RPM (Rotations Per Minute). With the straw chopper 72 at such rotational speeds, the velocity of the chopped straw is such that only the high frame rate cameras 220 can capture the straw pieces in successive images and derive a velocity and direction of the chopped straw therefrom. With even higher frame rates, the dynamic properties of the chopped straw are determined even more accurately. If the same straw pieces are visible in at least three successive images, the acceleration of the straw can be determined too. In combination with other information, such as a straw feed rate or the rotational speed of the straw chopper 72, this acceleration information may then be used to derive information about the interaction between the straw flow and the straw chopper 72 therefrom. Information about this interaction may, e.g., relate to chop quality and sharpness of the chopper knives 130.

## Claims

1. A straw chopper (72) for a harvester (10), the straw chopper (72) comprising:
- a chopper housing (110) with an inlet for receiving unchopped straw and an outlet for releasing chopped straw;
- a high resolution camera (210), configured to obtain high resolution images of at least a portion of the chopped straw;
- a high frame rate camera (220), configured to obtain high frame rate images of at least a portion of the chopped straw, an image resolution of the high frame rate camera (220) being lower than an image resolution of the high resolution camera (210), and a frame rate of the high frame rate camera (220) being higher than a frame rate of the high resolution camera (210); and
- a controller (300), coupled to the high resolution camera (210) and to the high frame rate camera (220) for respectively receiving the high resolution images and the high frame rate images therefrom.

2. A straw chopper (72) as claimed in claim 1, wherein the controller (300) is configured to process the high frame rate images and determine, based thereon, a velocity of the chopped straw.

3. A straw chopper (72) as claimed in claim 1 or 2, wherein the controller (300) is configured to process the high frame rate images and determine, based thereon, a direction of the chopped straw.

4. A straw chopper (72) as claimed in any preceding claim, wherein the controller (300) is configured to process the high frame rate images and determine, based thereon, a two dimensional vector field indicating a speed of the chopped straw in a cross section through the straw chopper (72).

5. A straw chopper (72) as claimed in any preceding claim, wherein the controller (300) is configured to process the high frame rate images and determine, based thereon, a speed difference between the chopped straw and a knife (140) of the straw chopper (72).

6. A straw chopper (72) as claimed in claim 5, wherein the controller (300) is configured to determine the speed of the knife (140) based on the high frame rate images.

7. A straw chopper (72) as claimed in claim 5 or 6, further comprising a rotational axle (120) carrying the knife (140), the knife extending radially from the rotational axle (120), and wherein the controller (300) is configured to determine the speed of the knife (140) based on a rotational speed of the rotational axle (120).

8. A straw chopper (72) as claimed in any preceding claim, wherein the controller (300) is configured to process the high resolution images to determine a quality of the chopped straw.

9. A straw chopper (72) as claimed in claim 8, wherein the controller (300) is configured to process the high resolution images in dependence of the high frame rate images.

10. A straw chopper (72) as claimed in claim 9, wherein the controller (300) is configured to process the high frame rate images and determine, based thereon, a velocity of the chopped straw, and to process the high resolution images in dependence of the velocity of the chopped straw.

11. A straw chopper (72) as claimed in any preceding claim, wherein the high resolution camera (210) and the high frame rate camera (220) are embodied by a single camera system, and wherein the controller (300) is configured to adjust the frame rate and the image resolution of the single camera system such as to alternately function as the high resolution camera (210) and the high frame rate camera (220).

12. A straw chopper (72) as claimed in any preceding claim, wherein the frame rate of the high frame rate camera (220) is at least 120 frames per second.

13. A method of monitoring an operation of a straw chopper (72) of a harvester (10), the method comprising:
- obtaining high frame rate images of straw that is chopped by the straw chopper (72),
- processing the high frame rate images to determine, based thereon, a velocity of the chopped straw, and
- depending on the velocity of the chopped straw, obtaining and processing high resolution images of at least a portion of the chopped straw, wherein an image resolution of the high resolution images is higher than an image resolution of the high frame rate images, and a frame rate of the high resolution images is lower than a frame rate of the high frame rate images.

14. A method of monitoring an operation of a straw chopper (72) of a harvester (10) as claimed in claim 13, wherein the processing the high resolution images comprises determining a quality of the chopped straw.

15. A non-transitory, computer-readable storage medium storing instructions thereon that when executed by one or more processors cause the one or more processors to execute the method of claim 13 or 14.
